# EUROPEAN PATENT SPECIFICATION

(11) **EP 4 467 247 B1**
(45) Date of publication and mention of the grant of the patent: **07.10.2026**
(21) Application number: 23743258.8
(22) Date of filing: 18.01.2023
(51) Int. Cl.: B05C 11/00, B05C 11/10, B05D 3/00, B05D 7/00, B05C 5/00, B41J 25/00, B41J 25/308

(54) **LIQUID MATERIAL COATING METHOD AND COATING DEVICE**
BESCHICHTUNGSVERFAHREN FÜR FLÜSSIGES MATERIAL UND BESCHICHTUNGSVORRICHTUNG
PROCÉDÉ D'APPLICATION DE REVÊTEMENT DE MATÉRIAU LIQUIDE ET DISPOSITIF DE REVÊTEMENT

(30) Priority: 18.01.2022 JP 2022005868
(43) Date of publication of application: 27.11.2024
(73) Proprietor: Musashi Engineering, Inc., Mitaka-shi, Tokyo 181-0011 (JP)
(72) Inventor: IKUSHIMA, Kazumasa, Mitaka-shi, Tokyo 181-0011 (JP)
(74) Representative: TBK
(86) International application number: PCT/JP2023/001245
(87) International publication number: WO 2023/140264

(56) References cited:
- WO-A1-2007/088921
- WO-A1-2015/019978
- WO-A1-2019/171791
- JP-A- 2012 173 504
- JP-A- 2012 173 504
- JP-A- 2019 062 871
- US-A1- 2016 165 123
- US-A1- 2018 257 100

## Description

### Technical Field

The present invention relates to a liquid-material application method and an application apparatus for performing application in the same application pattern on a plurality of workpieces arranged in an array. In the present specification, "application" includes dropping, line drawing, non-dropping dot forming, filling, coating, sealing, and the like.

### Background Art

Conventionally, in a case where application is performed on a plurality of workpieces arranged in an array, application operation has been performed on workpieces whose physical positioning is performed by fixedly arranging them using a pallet and fixture.

When the height of a discharge position set on an application route is not constant, the height of the discharge position is measured by a ranging device to adjust the height of a discharge head. For example, document JP 2005 - 138 013 A discloses that an irregularity detection device is moved along an application route, the height (irregularities) of a substrate surface along the route is measured, and height routing along the route is set (paragraphs [0062] to [0067]).

Document US 2016/165123 A1 discloses the preamble of the independent claims, a focus adjustment method and a device for the same, which are capable of realizing automatic focusing on a feature point of an arbitrary object selected from an image in which objects having various shapes are captured. The focus adjustment method includes a first step of obtaining a partial captured image in which a portion of the substrate is captured by the image capture device, and displaying the partial captured image in the image display region having a plurality of divided regions, a second step of causing the in-focus determination device to perform in-focus image determination for one divided region that is selected by a user through the input device, and a third step of displaying the captured image, which has been determined as the in-focus image, in the image display region.

### Summary of the Invention

### Problems to be Solved by the Invention

If positional misalignment occurs in the plurality of regularly arranged workpieces, discharge start positions set on the application route need to be corrected. Also, in a case where there is some difficulty in physically positioning the workpieces by fixing them as in the case of gel-like bodies, the discharge start positions need to be corrected.

Thus, an object of the present invention is to provide a liquid-material application method and an application apparatus that enable high-precision application even under conditions where positional misalignment occurs in regularly arranged workpieces.

### Means for Solving the Problems

This object is achieved by a liquid-material application method according to claim 1 and an application apparatus according to claim 13. Advantageous further developments are as set forth in the respective dependent claims.

According to one example, a liquid-material application method is provided in which application in a predetermined application pattern on a plurality of workpieces arranged with positional misalignment is performed. The liquid-material application method includes: a horizontal-position information measuring step of measuring horizontal-position information of each of the plurality of workpieces by an imaging device; a height information measuring step of measuring height information of each of the plurality of workpieces by a ranging device; and an application step of performing application in the application pattern on the plurality of workpieces based on the horizontal-position information measured in the horizontal-position information measuring step and the height information measured in the height information measuring step.

In the liquid-material application method, in the horizontal-position information measuring step, the horizontal-position information of the plurality of workpieces may be successively measured while the imaging device and the plurality of workpieces are moved relative to each other.

In the liquid-material application method, the plurality of workpieces may be same workpieces arranged in an array on a workpiece placement member, and in the horizontal-position information measuring step, the imaging device may be moved along such a scanning route that the imaging device linearly moves over a first row or a first column of workpieces arranged on the workpiece placement member, turns around outside a last workpiece in the first row or the first column to move to an end of a second row or a second column on the workpiece placement member, and linearly moves over the second row or the second column of workpieces.

In the liquid-material application method, on the scanning route in the horizontal-position information measuring step, the imaging device may turn around along a trajectory with one or more curvatures after moving to a position outside the last workpiece.

In the liquid-material application method, the scanning route in the horizontal-position information measuring step may have an acceleration section for speeding up the imaging device to a predetermined relative movement speed before the imaging device reaches a first one of workpieces to be imaged and a deceleration section for slowing down the imaging device to a predetermined relative movement speed after the imaging device images a last one of the workpieces to be imaged.

In the liquid-material application method, in the height information measuring step, the height information of the plurality of workpieces may be successively measured while the ranging device and the plurality of workpieces are moved relative to each other.

In the liquid-material application method, in the height information measuring step, the scanning route may be corrected to pass over ranged positions of positionally-misaligned workpieces based on the horizontal-position information of the workpieces measured in the horizontal-position information measuring step, and the ranging device may be moved along the corrected scanning route.

In the liquid-material application method, in the application step, application may be performed according to an application route corrected based on the height information of the workpieces measured in the height information measuring step.

In the liquid-material application method, the plurality of workpieces may be workpieces arranged at non-uniform rotation angles in circular or oval depressed portions of the workpiece placement member.

In the liquid-material application method, the workpieces may be gel-like bodies.

A liquid-material application apparatus according to another example includes: a discharge device configured to discharge liquid material; a relative movement device configured to move the discharge device and a workpiece relative to each other; and a controller having a computing device and a storage device that stores an application program. The application program controls operations of the discharge device and the relative movement device to execute the liquid-material application method described above on a plurality of workpieces arranged with positional misalignment.

Moreover, according to an example, a liquid-material application apparatus includes: a discharge device configured to discharge liquid material; a relative movement device configured to move the discharge device and a workpiece placement member relative to each other; and a controller having a computing device and a storage device that stores an application program. The application program controls operations of the discharge device and the relative movement device to execute the liquid-material application method described above on a plurality of same workpieces arranged in an array on the workpiece placement member with positional misalignment.

### Advantageous Effect of the Invention

According to the present invention, it is possible to perform high-precision application even under conditions where positional misalignment occurs in a plurality of regularly arranged workpieces.

### Brief Description of the Drawings

[Fig. 1] Fig. 1 is a view illustrating a liquid-material application apparatus according to a first embodiment example.
[Fig. 2] Fig. 2 is a view illustrating a workpiece (single unit) according to the first embodiment example.
[Fig. 3] Fig. 3 is a view illustrating elements of the workpiece (single unit) according to the first embodiment example.
[Fig. 4] Fig. 4 is an explanatory view of a workpiece placement member according to the first embodiment example.
[Fig. 5] Fig. 5 is a view illustrating a state where the workpieces are arranged in an array on the workpiece placement member of Fig. 4.
[Fig. 6] Fig. 6 is a diagram illustrating an initial scanning route.
[Fig. 7] Fig. 7 shows views illustrating positional misalignment of the workpieces arranged on the workpiece placement member of Fig. 4.
[Fig. 8] Fig. 8 is a diagram illustrating a turning portion in the initial scanning route.
[Fig. 9] Fig. 9 shows explanatory views of a workpiece (single unit) according to a second embodiment example, where (a) is a plan view and (b) is a side view.
[Fig. 10] Fig. 10 is a view illustrating a state where the workpieces are arranged in an array on a workpiece placement member according to the second embodiment example.
[Fig. 11] Fig. 11 shows views illustrating positional misalignment of the workpieces arranged on the workpiece placement member of Fig. 10, where (a) is a plan view of a first workpiece and (b) is a plan view of a second workpiece.

### Mode for Carrying out the Invention

Embodiment examples of the present invention will be described below.

### [First Embodiment Example]

### <Application Apparatus>

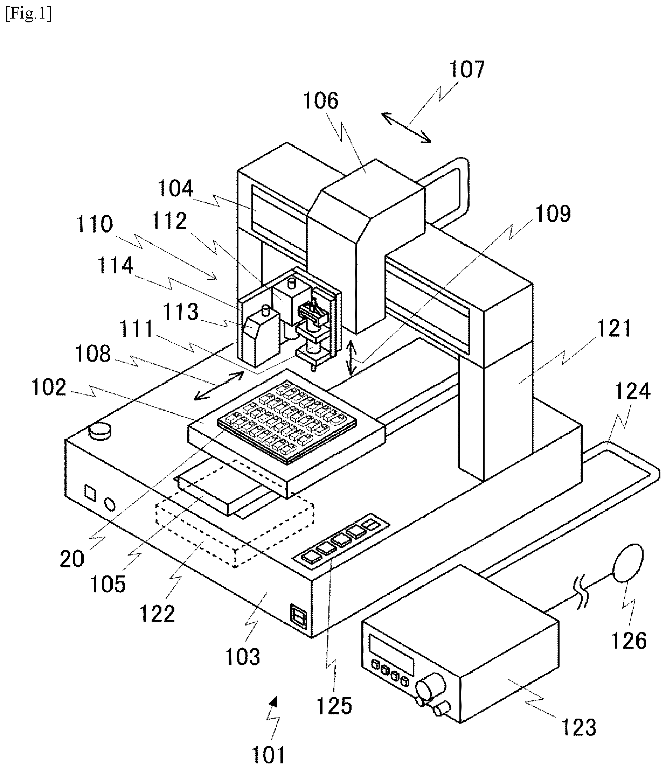

As illustrated in Fig. 1, an application apparatus 101 of this embodiment includes a discharge head 110 and a relative movement device (104, 105, 106) that moves the discharge head 110 and a worktable 102 relative to each other.

The relative movement device (104, 105, 106) includes an X-movement device 104, a Y-movement device 105, and a Z-movement device 106 that move the discharge head 110 and the worktable 102 relative to each other in an X-direction 107, a Y-direction 108, and a Z-direction 109, respectively.

The Y-movement device 105 is mounted on a top surface of a housing 103 to extend in the Y-direction 108. The X-movement device 104 is mounted on an arch-shaped frame 121 that is arranged in a direction perpendicular to the Y-movement device 105 to straddle the Y-movement device 105. The Z-movement device 106 is mounted on the X-movement device 104 and equipped with the discharge head 110. The discharge head 110 is allowed to move in the Z-direction 109 by the Z-movement device 106 and allowed to move in the X-direction 107 by the X-movement device 104. The worktable 102 is installed on the Y-movement device 105 and is allowed to move in the Y-direction 108 by the Y-movement device 105.

The relative movement device (104, 105, 106) is controlled by a movement control device 122 to be able to move the discharge head 110 to any position over a workpiece placement member 20 at any speed. Following devices can be used as the relative movement device (104, 105, 106), for example: a combined device of an electric motor, such as a servomotor or a stepping motor, and a ball screw; a device using a linear motor; and a device using a belt or a chain to transmit power.

The worktable 102 is constituted by a plate-like member and has a mechanism (not shown) for fixing the workpiece placement member 20. Following mechanisms can be used as the mechanism for fixing the workpiece placement member 20, for example: a mechanism that has a plurality of holes leading from an inside of the worktable 102 to its top surface and adheres the workpiece placement member 20 by sucking the air through the holes; and a mechanism that fixes the workpiece placement member 20 by holding the workpiece placement member 20 between fixing members and fixing the members to the worktable 102 with fixing means such as screws.

The discharge head 110 includes a liquid-material discharge device 111, an imaging device 112, and a ranging device 113.

The liquid-material discharge device 111 is an air dispenser including a reservoir that is equipped with a nozzle at its tip and stores liquid material, operations of which are controlled by a discharge control device 123. The discharge control device 123 is connected to the movement control device 122 by a signal cable 124, and performs control such that pressure-regulated air is applied into the reservoir of the discharge device 111 for a desired period of time in coordination with operations of the relative movement device (104, 105, 106) that operates in response to instructions from the movement control device 122. The discharge control device 123 is connected with a compressed gas source 126 that supplies compressed gas for feeding the liquid material under pressure. It is also possible to adopt a configuration where the discharge control device 123 and the movement control device 122 are realized as a physically single control device unlike the illustrated configuration example.

The imaging device 112, which is for capturing an image of each of workpieces 10 arranged in an array on the workpiece placement member 20 while moving, is a CCD camera, for example. A prime lens, which consists of a smaller number of lens elements, is preferably used from weight and cost perspectives. In this embodiment, since the Z-movement device 106 can raise and lower the imaging device 112, no zoom lens is required. In order to measure a position of the workpiece with high accuracy, a lens with a relatively high magnification and a shallow depth of field is preferably used. Besides CCD cameras, whatever can output image data so that the captured image can be processed with software can also be adopted as the imaging device 112, and it may include a magnifying lens or a light as necessary. The imaging device 112 is coupled to a side surface of a L-shaped holder 114 and connected to the movement control device 122 by a signal cable (not shown). The movement control device 122 uses dedicated software to realize a function of performing image processing on a captured image received from the imaging device 112 and calculating a horizontal position of the workpiece 10.

The ranging device 113 is a non-contact measuring device such as a laser displacement meter that measures a distance to a surface of a workpiece by irradiating the workpiece with laser light. The ranging device 113 is coupled to a side surface of the L-shaped holder 114 and connected to the movement control device 122 by a signal cable (not shown). The movement control device 122 uses dedicated software to realize a function of calculating the distance between the discharge device 111 and the workpiece 10 on the basis of signals received from the ranging device 113.

The application apparatus 101 of this embodiment can be connected with an instruction terminal not shown. Instructions on a position of the relative movement device (104, 105, 106), an operation of the discharge head 110, and the like can be given from the instruction terminal. Contents of the instructions are stored in the movement control device 122. The application apparatus 101 can sort related instruction contents to run them as a set of instructions. In other words, the application apparatus 101 can operate the discharge head 110 and the relative movement device (104, 105, 106) according to the instruction contents. This set of instructions is referred to as an application program, and a sequence of operations are run by executing the application program stored in a storage device of the movement control device 122. Following terminals can be used as the instruction terminal, for example: a dedicated terminal including a simple display device and a plurality of switches; and a personal computer with dedicated software installed. With the instruction terminal, it is possible to start and stop the operation of the application apparatus 101 based on the application program stored in the movement control device 122. A similar manipulation can also be performed with operation switches 125 installed on the top surface of the housing 103.

### <Workpiece>

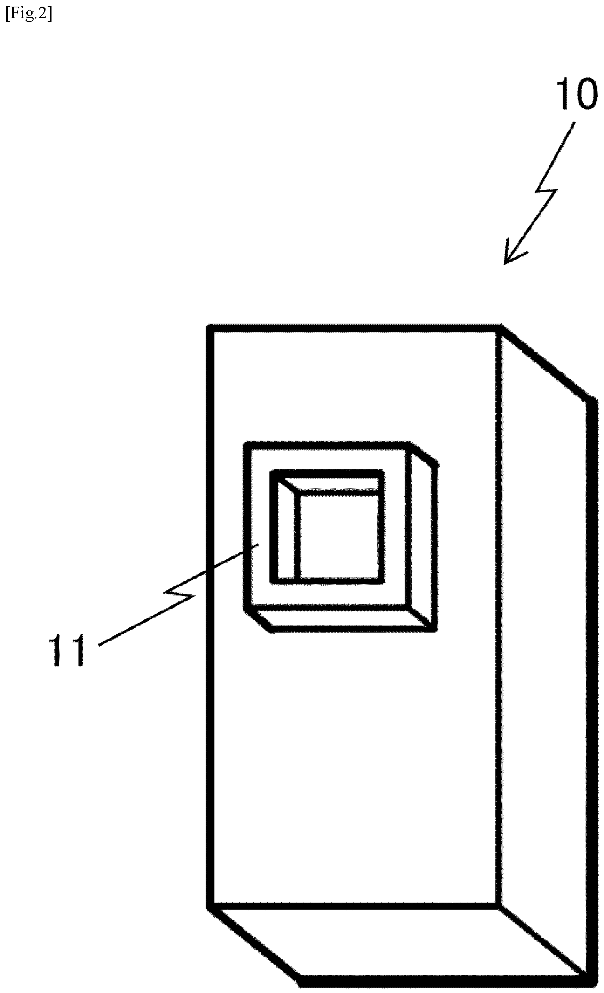

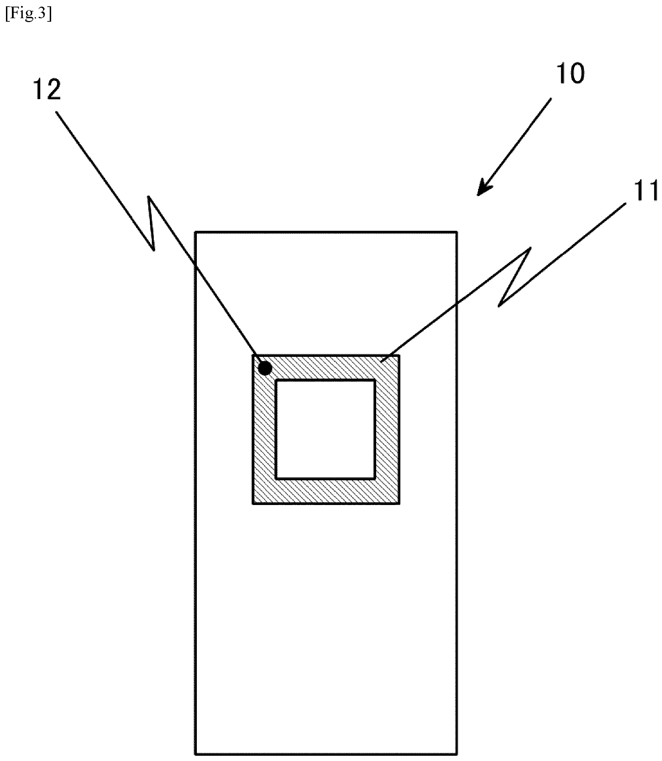

As illustrated in Fig. 2, the workpiece 10 of this embodiment has a rectangular parallelepiped shape and has a rectangular application surface 11 on its top surface. That is, an application pattern of each workpiece 10 is a rectangular frame shape in the first embodiment example. As illustrated in Fig. 3, a ranged position 12 at which ranging is performed by the ranging device 113 is set on the workpiece 10. The ranged position 12 is not limited to the illustrated point in Fig. 3, and the ranged position can be set to any point on the application surface 11. The workpiece 10 may be provided with an alignment mark for performing focus adjustment of the imaging device 112, horizontal-position information measurement, height information measurement, and the like. In this embodiment, no alignment mark is provided and the focus adjustment is performed using a corner of the application surface 11 or the like as a reference. The liquid material is applied on the application surface 11 of the workpiece 10 in a state where the workpiece 10 is arranged in a placement portion 21 of the workpiece placement member 20 described below.

### <Workpiece Placement Member>

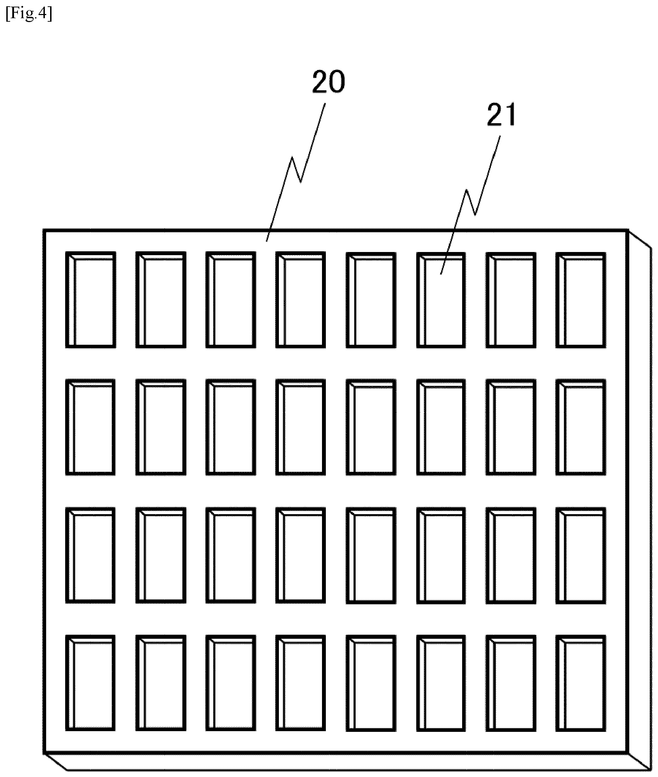

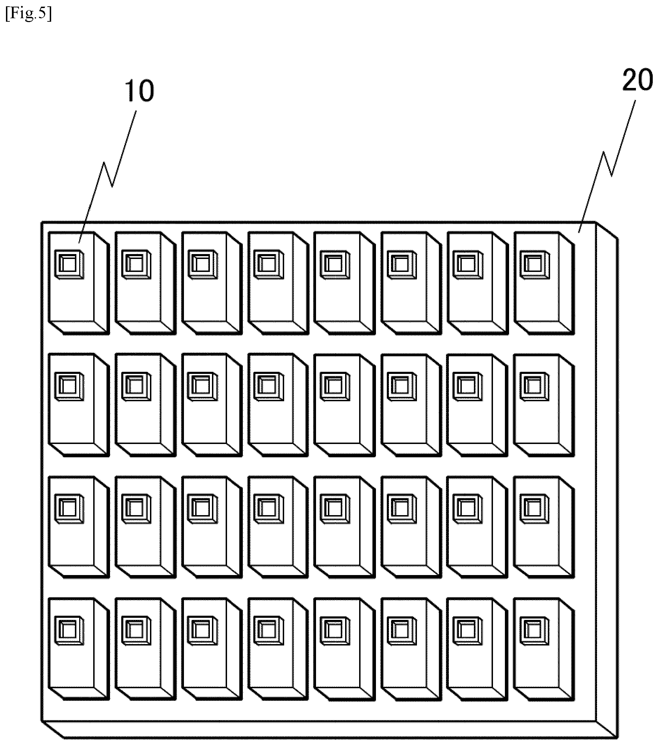

As illustrated in Fig. 4, the workpiece placement member 20 is a pallet having **thirty-two** placement portions 21 arranged in 4 rows * 8 columns. The thirty-two placement portions 21 are rectangular depressed portions slightly larger than the workpiece 10 and all have the same shape. As illustrated in Fig. 5, the workpieces 10 are placed and secured in respective ones of the thirty-two placement portions 21. Note that the number of the placement portions 21 provided on the workpiece placement member 20 is not limited to the illustrated example, and any number of the placement portions 21 can be arranged in an array. The workpiece placement member 20 may be provided with an alignment mark for image processing described below. In this embodiment, no alignment mark is provided and the image processing is performed using a corner of the placement portion 21 or the like as a reference.

### <Application Method>

### (1) Setting Scanning Route

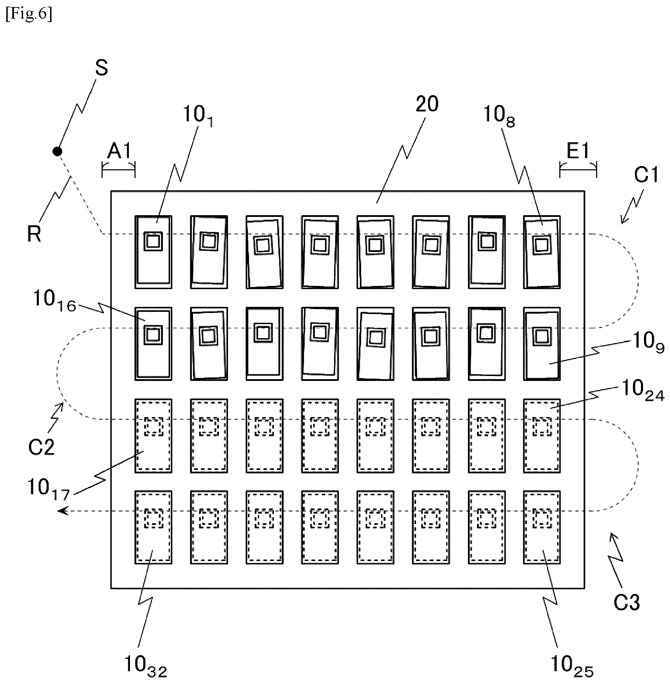

An initial scanning route R having a movement origin S is set for the workpiece placement member 20. As illustrated in Fig. 6, along the initial scanning route R of this embodiment, the discharge head 110 moves in a row direction and turns 180 degrees at three turning portions C1 to C3 located at ends of the rows. A starting end portion of each row has an acceleration section A for speeding up the discharge head 110 to a predetermined relative movement speed and a terminal end portion of each row has a deceleration section E for slowing down the discharge head 110 to a predetermined relative movement speed. As illustrated in Fig. 6, the scanning route passing over workpieces 10₁ to 10₈ arranged in a first row, for example, has an acceleration section A1 and a deceleration section E1, and the same applies to second and subsequent rows.

The initial scanning route R is set to pass over the ranged positions 12 of the thirty-two workpieces 10 that are ideally arranged. However, the actually arranged workpieces 10 have positional misalignment in a horizontal direction and a height direction, and thus the initial scanning route R needs to be corrected. The positional misalignment of workpiece in the horizontal direction occurs, for example because the depressed portion of the workpiece placement portion 21 is slightly larger than the outline of the workpiece 10. The positional misalignment of workpiece in the height direction occurs, for example because of a gap (play) between the workpiece and the pallet. Hereinafter, the positional misalignment of workpiece in the height direction is sometimes referred to as a tilt of workpiece.

### (2) Acquiring Horizontal-Position Information of Workpiece

The imaging device 112 successively images the thirty-two workpieces 10 while the relative movement device (104, 105, 106) moves the imaging device 112 and the worktable 102 relative to each other such that the imaging device 112 moves along the initial scanning route R. In this embodiment, images are captured so that the ranged position 12 of each workpiece 10 is included within an image. In this case, it should be avoided to stop the relative movement when the imaging device 112 captures an image at a measurement position of each workpiece because not only would it take time but also vibration would be applied to the worktable 102 at the time of stopping.

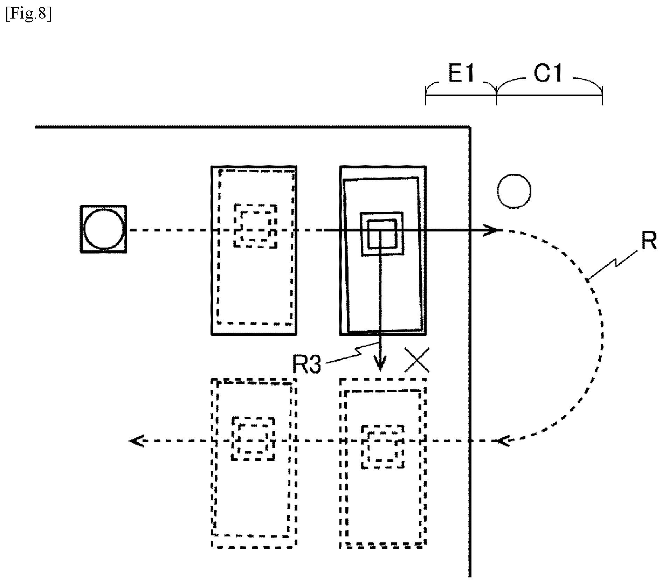

It is preferable that, after the workpiece 10 located last in the row direction (for example, workpiece 10₈) is imaged, the linear relative movement continues at least until the imaging device 112 moves to outside the last workpiece 10, and the imaging device 112 is turned around in a trajectory with a curve and transferred to a next row. It is more preferable that the linear relative movement continues until the imaging device 112 moves outside the workpiece placement member 20. That is, as illustrated in Fig. 8, the imaging device 112 preferably continues the linear movement throughout the section of distance E1. It is because unwanted vibration would be applied to the worktable 102 if the imaging device 112 moves in a trajectory like a route R3 illustrated in Fig. 8.

More preferably, the imaging device 112 is moved to turn around in a trajectory with one or more curvatures outside the workpiece placement member 20 at each turning portion. For example, as in the turning portion C1 of the initial scanning route R illustrated in Fig. 8, the imaging device 112 is moved in an arc-shaped trajectory outside the workpiece placement member 20 at each turning portion. Unlike Fig. 8, the imaging device 112 may be moved in a trajectory having an almost Π shape whose corners are rounded with a curve such as a quarter circle.

Although a mode where the imaging device 112 is moved back and force in the row direction as illustrated in Fig. 6 is described in this embodiment, the same description applies to a mode where the imaging device 112 is moved back and forth in the column direction. That is, it is preferable that, after the workpiece 10 located last in the column direction is imaged, the linear relative movement continues and the imaging device 112 is moved in an arc-shaped trajectory outside the workpiece placement member 20.

The captured image acquired by the imaging device 112 is transmitted to the movement control device 122, where image processing is performed to calculate positional misalignment of workpiece in the horizontal direction. More particularly, the movement control device 122 executes, on each of all the workpieces 10, operations of: extracting corners of the placement portion 21 and the workpiece 10 by image processing; and calculating an amount of horizontal positional misalignment of the workpiece 10 from a positional relationship with the placement portion 21 where this workpiece 10 is placed. Note that captured images corresponding one-to-one to the workpieces 10 are used to calculate the amounts of positional misalignment in this embodiment rather than a captured image including a plurality or all of the workpieces 10 being used, which would cause failure in measuring positional misalignment of the workpieces with high accuracy.

### (3) Correcting Scanning Route

The movement control device 122 determines whether all the ranged positions 12 of the workpieces are on the initial scanning route R. If any ranged positions are not on the initial scanning route R, the initial scanning route R is corrected to create a corrected scanning route R2 that passes over all the ranged positions 12 of the workpieces. In addition, the movement control device 122 associates the positional misalignment of the workpieces 10 in the horizontal direction with the corrected scanning route R2. Specifically, horizontal-coordinate information of the application pattern including application start positions for performing application on the application surfaces 11 of respective workpieces 10 is corrected.

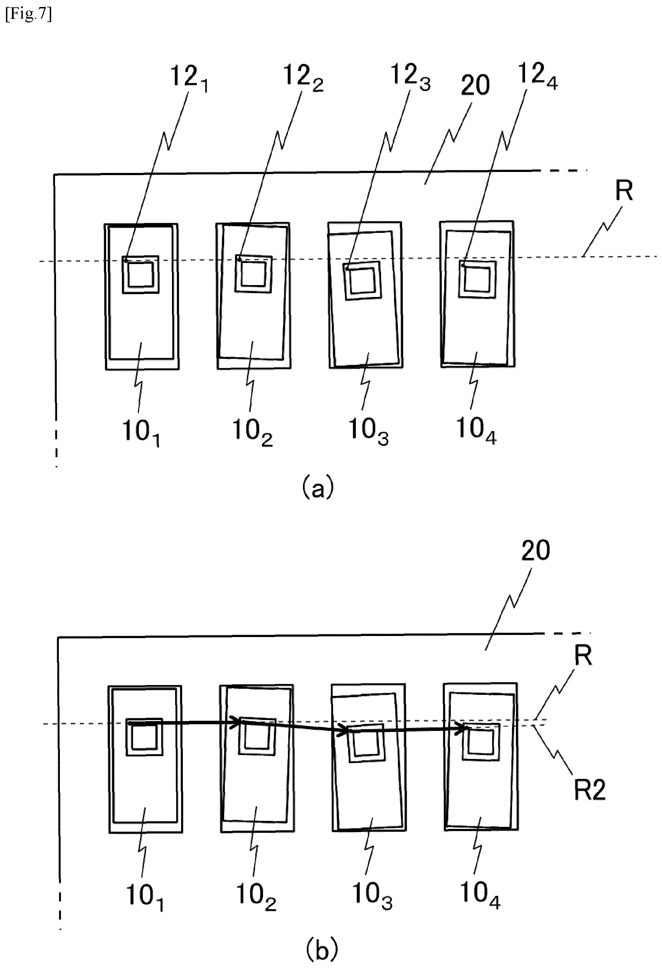

Fig. 7 shows partial enlarged views of the workpiece placement member 20 including the workpiece 10₁ closest to the movement origin S. As illustrated in Fig. 7 (a), the initial scanning route R is set to traverse ranged positions 12₁ and 12₂ but not ranged positions 12₃ and 12₄. Thus, as illustrated in Fig. 7 (b), the initial scanning route R is corrected into the corrected scanning route R2 passing over all the ranged positions 12 of the workpieces 10. In this case, a connecting route between two adjacent ranged positions 12 preferably includes no corner. This is because it can prevent unwanted vibration from being applied to the worktable 102.

### (4) Acquiring Height Information of Workpiece

The ranging device 113 successively measures heights of the thirty-two workpieces 10 while the relative movement device (104, 105, 106) moves the ranging device 113 and the worktable 102 relative to each other such that the ranging device 113 follows the corrected initial scanning route R2. In this case, it should be avoided to stop the relative movement when the ranging device 113 performs ranging at a measurement position of each workpiece because not only would it take time but also vibration would be applied to the worktable 102 at the time of stopping.

### (5) Setting Application Route

The movement control device 122 associates the tilts of the workpieces 10 (positional misalignment in the height direction) acquired by the ranging device 113 with the corrected scanning route R2. Specifically, height coordinate information of the application pattern including application start positions for performing application on the application surfaces 11 of respective workpieces 10 is corrected. As a result, the information of the positional misalignment in the horizontal direction and the height direction is added to the corrected scanning route R2, which becomes an application route RA.

### (6) Executing Application Operation

The movement control device 122 moves the discharge device 111 and the worktable 102 relative to each other along the application route RA, and the discharge control device 123 executes application in the application pattern at a discharge position for each workpiece set on the application route. If the workpieces 10 arranged on the workpiece placement member 20 have positional misalignment, the application route RA has the horizontal and heigh coordinate information corrected on the basis of the information of the positional misalignment of the workpieces. Therefore, application in the application pattern can be accurately executed on each workpiece. Upon completion of the application operation for the current workpiece placement member 20, a next workpiece placement member 20 is placed on the worktable 102 and the above steps of (1) to (6) are performed again.

According to the application apparatus 101 and the application method performed by that apparatus in the first embodiment example described above, it is possible to perform high-precision application even under conditions where positional misalignment occurs in the workpieces 10 in the horizontal direction and the height direction on the application route.

In addition, the application route RA is set to prevent unwanted vibration from being applied to the workpieces 10, and therefore a problem of quality deterioration due to unwanted vibration can be solved.

### [Second Embodiment Example]

A second embodiment example is different from the first embodiment example in workpieces 30 and a workpiece placement member 40. Hereinafter, common descriptions with the first embodiment example will be omitted.

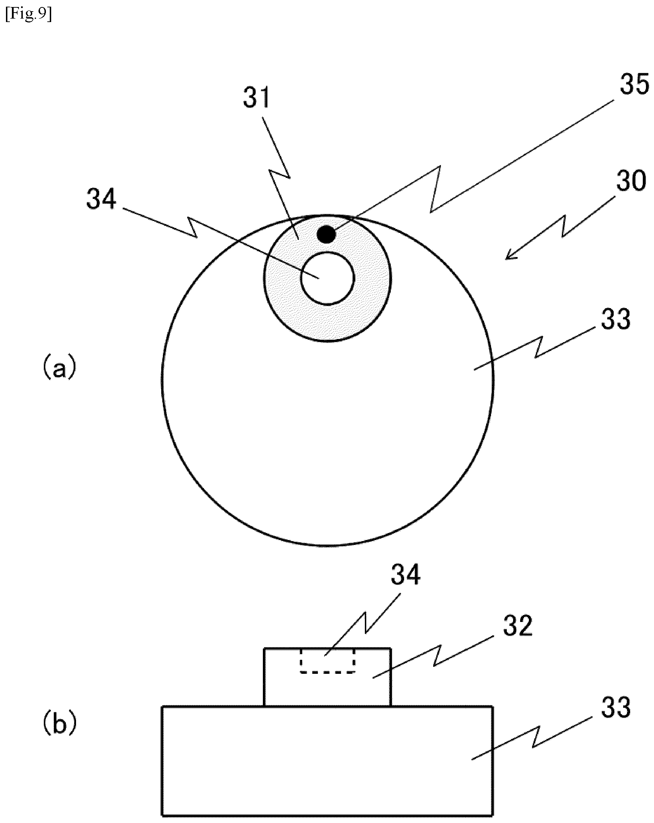

As illustrated in Fig. 9, the workpiece 30 of the second embodiment example includes a protrusion 32 having an application surface 31, and a main body 33. A top surface of the cylindrical protrusion 32 is formed with a recess 34 and has the annular application surface 31 surrounding the recess 34. That is, an application pattern of each workpiece 30 is ring-shaped in the second embodiment example. The main body 33 has a disk shape with a diameter larger than that of the protrusion 32. A ranged position 35 to be measured by the ranging device 113 is set on the workpiece 30. The ranged position 35 is not limited to the illustrated point in Fig. 9, and the ranged position can be set to any point on the application surface 31.

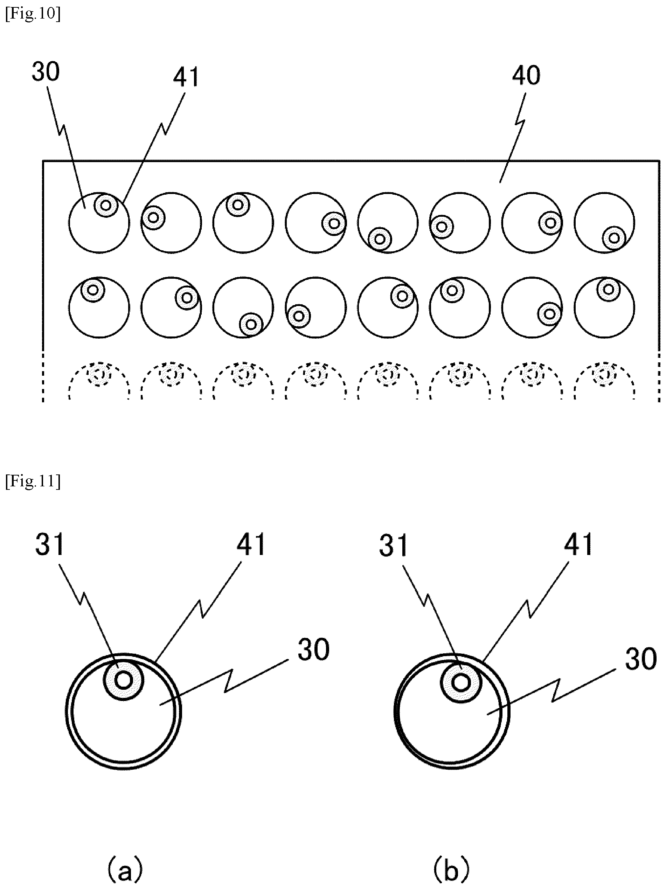

As illustrated in Fig. 10, the workpiece placement member 40 is a pallet having a plurality of placement portions 41 arranged in an array. The plurality of placement portions 41 are circular depressed portions slightly larger than the workpiece 30 and all have the same shape. As illustrated in Fig. 10, the workpieces 30 are placed and secured in respective ones of the plurality of placement portions 41. Note that the workpieces 30 and the placement portions 41 may be oval.

Fig. 11 shows enlarged views of a placement portion 41 of the workpiece placement member 40 illustrated in Fig. 10. Positional misalignment in the horizontal direction occurs because the placement portion 41 is larger than the workpiece 30. Further, since the main body 33 of the workpiece has a disk shape, positional misalignment including non-uniformity in rotational postures occurs in the workpieces 30 placed in the placement portions 41. That is, as illustrated in Fig. 11 (a) and (b), a position of the application surface 31 with respect to the placement portion 41 varies in the horizontal direction and in the rotation angle from workpiece 30 to workpiece 30. Note that positional misalignment in the height direction (tilt) also occurs in the workpieces 30 in this embodiment example.

In the second embodiment example, as in the first embodiment example, application operation is executed after executing: (1) setting a scanning route; (2) acquiring horizontal-position information of the workpieces; (3) correcting the scanning route; (4) acquiring height information of the workpieces; and (5) setting an application route. This makes it possible to perform high-precision application on each application surface 31 even if there has been occurred positional misalignment in the plurality of workpieces 30 placed on the workpiece placement member 40.

Although preferred embodiment examples of the present invention have been described above, the technical scope of the present invention is not limited to the descriptions of the above embodiment examples. Various alterations and modifications can be applied without departing from the technical idea of the present invention, and such altered or modified modes also fall within the technical scope of the present invention as defined by the claims.

For example, even in a case where there is some difficulty in physically positioning the workpieces by fixing them as in the case of gel-like bodies, or in a case where the shape of workpiece or the like varies due to a manufacturing error, high-precision application can be performed on each application surface according to the present invention.

Although the workpieces arranged in an array on the workpiece placement member have been described as an example in the embodiment examples, workpieces to which the present invention is applicable are not limited to the workpieces arranged in an array. For example, the present invention can also be applied to a case where liquid material is applied in a predetermined application pattern on a plurality of elements regularly arranged with positional misalignment on a substrate.

Further, the air dispenser that performs discharge by applying pressure-regulated air into the reservoir having the nozzle at its tip for a desired period of time has been described as an example in the embodiment examples. However, the dispenser is not limited to this type, and various types of dispensers can be used.

Examples of a type of a discharge method in which liquid material comes into contact with a workpiece before separating from a discharge port of a nozzle include: a tubing type having a flat tubing mechanism or a rotary tubing mechanism; a plunger type that includes a plunger configured to slide in close contact with an inner surface of a reservoir having a nozzle at its tip and moves the plunger by a desired amount to carry out discharge; a screw type that discharges liquid material by rotation of a screw in a liquid chamber communicating with a nozzle; and a valve type that opens and closes a valve to control discharge of liquid material to which desired pressure is applied.

Examples of a type of a discharge method in which liquid material comes into contact with a workpiece after separating from a discharge port of a nozzle include: a jet type that applies inertial force to liquid material by moving a plunger (valve element) forward and stopping the plunger suddenly to discharge and fly the liquid material from a tip of a nozzle; and an ink jet type that operates in a continuous ejecting mode or a demand mode.

### List of Reference Symbols

10: workpiece (first embodiment example) / 11: application surface / 12: ranged position / 20: workpiece placement member (first embodiment example) / 21: placement portion (rectangle) / 30: workpiece (second embodiment example) / 31: application surface / 32: protrusion / 33: main body / 34: recess / 35: ranged position / 40: workpiece placement member (second embodiment example) / 41: placement portion (circle) / 101: liquid-material application apparatus / 102: worktable / 103: housing / 104: X-movement device / 105: Y-movement device / 106: Z-movement device / 107: X-direction / 108: Y-direction / 109: Z-direction / 110: discharge head / 111: liquid-material discharge device / 112: imaging device / 113: ranging device / 114: holder / 121: frame / 122: movement control device / 123: discharge control device / 124: signal cable / 125: operation switch / 126: compressed gas source

## Claims

1. A liquid-material application method of performing application in a predetermined application pattern on a plurality of workpieces (10, 30) arranged with positional misalignment, the liquid-material application method comprising:
a horizontal-position information measuring step of measuring horizontal-position information of each of the plurality of workpieces (10, 30) by an imaging device (112) that moves along an initial scanning route;
a height information measuring step of measuring height information of a ranged position (12, 35) of each of the plurality of workpieces (10, 30) by a ranging device (113); and
an application step of performing application in the application pattern on the plurality of workpieces (10, 30) based on the horizontal-position information measured in the horizontal-position information measuring step and the height information measured in the height information measuring step;
**characterized in that**, in the height information measuring step, the initial scanning route is corrected to pass over respective ranged positions (12, 35) of positionally-misaligned workpieces (10, 30) based on the horizontal-position information of the workpieces (10, 30) measured in the horizontal-position information measuring step, and the ranging device (113) is moved along the corrected scanning route.

2. The liquid-material application method according to claim 1, wherein the initial scanning route is set such that the ranging device (113) passes over the ranged positions (12, 35) of the plurality of workpieces (10, 30) arranged without positional misalignment.

3. The liquid-material application method according to claim 1 or 2, wherein the plurality of workpieces (10, 30) are workpieces arranged on a workpiece placement member (20, 40).

4. The liquid-material application method according to claim 3, wherein application in the predetermined application pattern is performed on the plurality of workpieces (10, 30) arranged with the positional misalignment by moving a discharge head (110) and a worktable (102) to which the workpiece placement member (20, 40) is fixed relative to each other, the discharge head (110) including a discharge device (111) that discharges liquid material, the imaging device (112), and the ranging device (113).

5. The liquid-material application method according to any one of claims 1 to 4, wherein, in the horizontal-position information measuring step, the horizontal-position information of the plurality of workpieces (10, 30) is successively measured while the imaging device (112) and the plurality of workpieces (10, 30) are moved relative to each other.

6. The liquid-material application method according to claim 5, wherein the plurality of workpieces (10, 30) are same workpieces arranged in an array on a workpiece placement member (20, 40), and
in the horizontal-position information measuring step, the imaging device (112) is moved along such a scanning route that the imaging device (112) linearly moves over a first row or a first column of workpieces (10, 30) arranged on the workpiece placement member (20, 40), turns around outside a last workpiece in the first row or the first column to move to an end of a second row or a second column on the workpiece placement member (20, 40), and linearly moves over the second row or the second column of workpieces (10, 30).

7. The liquid-material application method according to claim 6, wherein, on the scanning route in the horizontal-position information measuring step, the imaging device (112) turns around along a trajectory with one or more curvatures after moving to a position outside the last workpiece (10, 30).

8. The liquid-material application method according to claim 6 or 7, wherein the scanning route in the horizontal-position information measuring step has an acceleration section for speeding up the imaging device (112) to a predetermined relative movement speed before the imaging device (112) reaches a first one of workpieces (10, 30) to be imaged and a deceleration section for slowing down the imaging device (112) to a predetermined relative movement speed after the imaging device (112) images a last one of the workpieces to be imaged.

9. The liquid-material application method according to any one of claims 1 to 8, wherein, in the height information measuring step, the height information of the plurality of workpieces (10, 30) is successively measured while the ranging device (113) and the plurality of workpieces (10, 30) are moved relative to each other.

10. The liquid-material application method according to any one of claims 1 to 9, wherein, in the application step, application is performed according to an application route corrected based on the height information of the workpieces (10, 30) measured in the height information measuring step.

11. The liquid-material application method according to any one of claims 3, 4 and 6 to 8, wherein the plurality of workpieces (10, 30) are workpieces arranged at non-uniform rotation angles in circular or oval depressed portions (34) of the workpiece placement member (20, 40).

12. The liquid-material application method according to any one of claims 1 to 11, wherein the workpieces (10, 30) are gel-like bodies.

13. A liquid-material application apparatus (101) comprising:
a discharge head (110) including
a discharge device (111) configured to discharge liquid material;
an imaging device (112); and
a ranging device (113);
a relative movement device (104, 105, 106) configured to move the discharge head (110) and a plurality of workpieces (10, 30) relative to each other; and
a controller (122) having a computing device and a storage device that stores an application program;
wherein the application program controls operations of the discharge head (110) and the relative movement device (104, 105, 106) to execute the liquid-material application method according to any one of claims 1 to 12 on the plurality of workpieces (10, 30) arranged with positional misalignment.

14. The liquid-material application apparatus (101) according to claim 13, wherein the plurality of workpieces (10, 30) are same workpieces arranged in an array on a workpiece placement member (20, 40),
wherein the relative movement device (104, 105, 106) is configured to move the discharge head (110) and the workpiece placement member (20, 40) relative to each other; and
the application program controls operations of the discharge head (110) and the relative movement device (104, 105, 106) to execute the liquid-material application method according to any one of claims 6 to 8 on the plurality of same workpieces (10, 30) arranged in the array on the workpiece placement member (20, 40) with positional misalignment.

## Patentansprüche

1. Verfahren zum Auftragen von flüssigem Material, bei dem das Auftragen in einem vorgegebenen Auftragungsmuster auf eine Vielzahl von Werkstücken (10, 30) erfolgt, die mit Positionsabweichungen zueinander angeordnet sind, wobei das Verfahren zum Auftragen von flüssigem Material folgende Schritte umfasst:
einen Schritt zum Erfassen von Informationen zur horizontalen Position, bei dem Informationen zur horizontalen Position jedes der Vielzahl von Werkstücken (10, 30) mittels einer Bildaufnahmevorrichtung (112) erfasst werden, die sich entlang einer anfänglichen Abtastbahn bewegt;
einen Schritt zum Messen von Höheninformationen, bei dem Höheninformationen einer gemessenen Position (12, 35) jedes der Vielzahl von Werkstücken (10, 30) mittels einer Entfernungsmessvorrichtung (113) gemessen werden; und
einen Auftragungsschritt zum Ausführen des Auftragens gemäß dem Auftragungsmuster auf die Vielzahl von Werkstücken (10, 30) auf der Grundlage der im Schritt zur Messung der horizontalen Positionsinformationen ermittelten horizontalen Positionsinformationen und der im Schritt zur Messung der Höheninformationen ermittelten Höheninformationen;
**dadurch gekennzeichnet, dass** im Schritt zum Messen der Höheninformationen die anfängliche Abtastbahn so korrigiert wird, dass sie über die jeweiligen gemessenen Positionen (12, 35) von in der Position abweichenden Werkstücken (10, 30) verläuft, basierend auf den im Schritt zum Messen der horizontalen Positionsinformationen gemessenen horizontalen Positionsinformationen der Werkstücke (10, 30), und dass die Entfernungsmessvorrichtung (113) entlang der korrigierten Abtastbahn bewegt wird.

2. Verfahren zum Auftragen von flüssigem Material gemäß Anspruch 1, wobei die anfängliche Abtastbahn so festgelegt wird, dass die Entfernungsmessvorrichtung (113) über die gemessenen Positionen (12, 35) der Vielzahl von Werkstücken (10, 30) verläuft, die ohne Positionsabweichung angeordnet sind.

3. Verfahren zum Auftragen von flüssigem Material gemäß Anspruch 1 oder 2, wobei es sich bei der Vielzahl von Werkstücken (10, 30) um Werkstücke handelt, die auf einem Werkstückhalterung (20, 40) angeordnet sind.

4. Verfahren zum Auftragen von flüssigem Material gemäß Anspruch 3, wobei das Auftragen in dem vorgegebenen Auftragungsmuster auf die Vielzahl von Werkstücken (10, 30), die mit der Positionsabweichung angeordnet sind, erfolgt, indem ein Ausstoßkopf (110) und ein Arbeitstisch (102), an dem das Werkstückhalterung (20, 40) befestigt ist, relativ zueinander bewegt werden, wobei der Ausstoßkopf (110) eine Ausstoßvorrichtung (111) zum Ausstoßen von flüssigem Material, die Bildgebungsvorrichtung (112) und die Entfernungsmessvorrichtung (113) umfasst.

5. Verfahren zum Auftragen von flüssigem Material gemäß einem der Ansprüche 1 bis 4, wobei im Schritt zum Messen der horizontalen Positionsinformationen die horizontalen Positionsinformationen der Vielzahl von Werkstücken (10, 30) nacheinander gemessen werden, während die Bildgebungsvorrichtung (112) und die Vielzahl von Werkstücken (10, 30) relativ zueinander bewegt werden.

6. Verfahren zum Auftragen von flüssigem Material gemäß Anspruch 5, wobei es sich bei der Vielzahl von Werkstücken (10, 30) um identische Werkstücke handelt, die in einer Anordnung auf einem Werkstückhalterung (20, 40) angeordnet sind, und
im Schritt zur Messung der Horizontalpositionsinformationen die Bildaufnahmevorrichtung (112) entlang einer solchen Abtastbahn bewegt wird, dass sich die Bildaufnahmevorrichtung (112) linear über eine erste Reihe oder eine erste Spalte von Werkstücken (10, 30), die auf dem Werkstückhalterung (20, 40) angeordnet sind, außerhalb eines letzten Werkstücks in der ersten Reihe oder der ersten Spalte umdreht, um sich zu einem Ende einer zweiten Reihe oder einer zweiten Spalte auf dem Werkstückhalterung (20, 40) zu bewegen, und sich linear über die zweite Reihe oder die zweite Spalte der Werkstücke (10, 30) bewegt.

7. Verfahren zum Auftragen von flüssigem Material gemäß Anspruch 6, wobei die Abbildungsvorrichtung (112) auf der Abtaststrecke im Schritt zur Messung der horizontalen Positionsinformationen entlang einer Bahn mit einer oder mehreren Krümmungen wendet, nachdem sie sich zu einer Position außerhalb des letzten Werkstücks (10, 30) bewegt hat.

8. Verfahren zum Auftragen von flüssigem Material gemäß Anspruch 6 oder 7, wobei die Abtaststrecke im Schritt zur Messung der horizontalen Positionsinformationen einen Beschleunigungsabschnitt zum Beschleunigen der Bildaufnahmevorrichtung (112) auf eine vorbestimmte relative Bewegungsgeschwindigkeit aufweist, bevor die Bildaufnahmevorrichtung (112) ein erstes der abzubildenden Werkstücke (10, 30) erreicht, sowie einen Verzögerungsabschnitt zum Abbremsen der Bildgebungsvorrichtung (112) auf eine vorbestimmte relative Bewegungsgeschwindigkeit, nachdem die Bildgebungsvorrichtung (112) ein letztes der abzubildenden Werkstücke abgebildet hat.

9. Verfahren zum Auftragen von flüssigem Material gemäß einem der Ansprüche 1 bis 8, wobei im Schritt zum Messen der Höheninformationen die Höheninformationen der Vielzahl von Werkstücken (10, 30) nacheinander gemessen werden, während die Entfernungsmessvorrichtung (113) und die Vielzahl von Werkstücken (10, 30) relativ zueinander bewegt werden.

10. Verfahren zum Auftragen von flüssigem Material gemäß einem der Ansprüche 1 bis 9, wobei im Auftragungsschritt des Auftragens gemäß einer Auftragungsroute erfolgt, die auf der Grundlage der im Schritt zur Messung der Höheninformationen gemessenen Höheninformationen der Werkstücke (10, 30) korrigiert wurde.

11. Verfahren zum Auftragen von flüssigem Material gemäß einem der Ansprüche 3, 4 und 6 bis 8, wobei es sich bei der Vielzahl von Werkstücken (10, 30) um Werkstücke handelt, die in kreisförmigen oder ovalen Vertiefungen (34) der Werkstückhalterung (20, 40) in ungleichmäßigen Drehwinkeln angeordnet sind.

12. Verfahren zum Auftragen von flüssigem Material gemäß einem der Ansprüche 1 bis 11, wobei die Werkstücke (10, 30) gelartige Körper sind.

13. Vorrichtung (101) zum Auftragen von flüssigem Material, Folgendes umfassend:
einen Ausstoßkopf (110) mit
einer Ausstoßvorrichtung (111), die zum Ausstoßen von flüssigem Material ausgelegt ist;
einer Bildgebungsvorrichtung (112); und
einer Entfernungsmessvorrichtung (113);
eine Relativbewegungsvorrichtung (104, 105, 106), die ausgelegt ist, um den Ausstoßkopf (110) und eine Vielzahl von Werkstücken (10, 30) relativ zueinander zu bewegen; und
eine Steuerung (122) mit einer Berechnungsvorrichtung und einer Speichervorrichtung, die ein Anwendungsprogramm speichert;
wobei das Anwendungsprogramm den Betrieb des Ausstoßkopfes (110) und der Relativbewegungsvorrichtung (104, 105, 106) steuert, um das Verfahren zum Auftragen von flüssigem Material gemäß einem der Ansprüche 1 bis 12 an der Vielzahl von Werkstücken (10, 30) auszuführen, die mit einer Positionsabweichung zueinander angeordnet sind.

14. Vorrichtung (101) zum Auftragen von flüssigem Material gemäß Anspruch 13, wobei es sich bei der Vielzahl von Werkstücken (10, 30) um identische Werkstücke handelt, die in einer Anordnung auf einem Werkstückhalterung (20, 40) angeordnet sind,
wobei die Relativbewegungsvorrichtung (104, 105, 106) ausgelegt ist, um den Ausstoßkopf (110) und das Werkstückhalterung (20, 40) relativ zueinander zu bewegen, und
das Anwendungsprogramm den Betrieb des Ausstoßkopfes (110) und der Relativbewegungsvorrichtung (104, 105, 106) steuert, um das Verfahren zum Aufbringen von flüssigem Material gemäß einem der Ansprüche 6 bis 8 an der Vielzahl identischer Werkstücke (10, 30) durchzuführen, die in der Anordnung auf dem Werkstückhalterung (20, 40) mit einer Positionsabweichung zueinander angeordnet sind.

## Revendications

1. Procédé d'application de matériau liquide consistant à effectuer une application selon un motif d'application prédéterminé sur une pluralité de pièces à usiner (10, 30) disposées avec désalignement positionnel, ledit procédé d'application de matériau liquide comprenant :
une étape de mesure des informations de position horizontale consistant à mesurer des informations de position horizontale de chacune des pièces à usiner (10, 30) par un dispositif d'imagerie (112) se déplaçant le long d'un trajet de balayage initial ;
une étape de mesure des informations de hauteur, consistant à mesurer les informations de hauteur d'une position mesurée (12, 35) de chacune des pièces à usiner (10, 30) par un dispositif de télémétrie (113) ; et
une étape d'application consistant à effectuer l'application selon le motif d'application sur la pluralité de pièces à usiner (10, 30) sur la base des informations de position horizontale mesurées lors de l'étape de mesure des informations de position horizontale et des informations de hauteur mesurées lors de l'étape de mesure des informations de hauteur ;
**caractérisé en ce que**, lors de l'étape de mesure des informations de hauteur, le trajet de balayage initial est corrigé de manière à passer au-dessus des positions mesurées respectives (12, 35) des pièces à usiner (10, 30) mal alignées, sur la base des informations de position horizontale des pièces à usiner (10, 30) mesurées lors de l'étape de mesure des informations de position horizontale, et le dispositif de télémétrie (113) est déplacé le long du trajet de balayage corrigé.

2. Procédé d'application de matériau liquide selon la revendication 1, dans lequel le trajet de balayage initial est défini de telle sorte que le dispositif de télémétrie (113) passe au-dessus des positions mesurées (12, 35) de la pluralité de pièces à usiner (10, 30) disposées sans désalignement positionnel.

3. Procédé d'application de matériau liquide selon la revendication 1 ou 2, dans lequel la pluralité de pièces à usiner (10, 30) sont des pièces à usiner disposées sur un élément de placement de pièces à usiner (20, 40).

4. Procédé d'application de matériau liquide selon la revendication 3, dans lequel une application selon le motif d'application prédéterminé est effectuée sur la pluralité de pièces à usiner (10, 30) disposées avec un désalignement positionnel, en déplaçant une tête de décharge (110) et une table de travail (102) sur laquelle l'élément de placement de pièces à usiner (20, 40) est fixé l'un par rapport à l'autre, la tête de décharge (110) comportant un dispositif de décharge (111) qui décharge le matériau liquide, le dispositif d'imagerie (112) et le dispositif de télémétrie (113).

5. Procédé d'application de matériau liquide selon l'une quelconque des revendications 1 à 4, dans lequel, lors de l'étape de mesure des informations de position horizontale, les informations de position horizontale de la pluralité de pièces à usiner (10, 30) sont mesurées successivement tandis que le dispositif d'imagerie (112) et la pluralité de pièces à usiner (10, 30) sont déplacés l'un par rapport à l'autre.

6. Procédé d'application de matériau liquide selon la revendication 5, dans lequel les plusieurs pièces à usiner à usiner (10, 30) sont des pièces à usiner identiques disposées en réseau sur un élément de placement de pièces à usiner (20, 40), et
lors de l'étape de mesure des informations de position horizontale, le dispositif d'imagerie (112) est déplacé selon un trajet de balayage tel que le dispositif d'imagerie (112) se déplace linéairement au-dessus d'une première rangée ou d'une première colonne de pièces à usiner (10, 30) disposées sur l'élément de placement de pièces à usiner (20, 40), effectue un virage à l'extérieur d'une dernière pièce de la première rangée ou de la première colonne pour se déplacer vers une extrémité d'une deuxième rangée ou d'une deuxième colonne sur l'élément de placement de pièces à usiner (20, 40), et se déplace linéairement sur la deuxième rangée ou la deuxième colonne de pièces à usiner (10, 30).

7. Procédé d'application de matériau liquide selon la revendication 6, dans lequel, sur le trajet de balayage lors de l'étape de mesure des informations de position horizontale, le dispositif d'imagerie (112) effectue un virage le long d'une trajectoire présentant une ou plusieurs courbures après s'être déplacé vers une position située à l'extérieur de la dernière pièce à usiner (10, 30).

8. Procédé d'application de matériau liquide selon la revendication 6 ou 7, dans lequel le trajet de balayage, lors de l'étape de mesure des informations de position horizontale, comporte une section d'accélération pour accélérer le dispositif d'imagerie (112) jusqu'à une vitesse de déplacement relative prédéterminée avant que le dispositif d'imagerie (112) n'atteigne une première des pièces à usiner (10, 30) à être imagées, et une section de décélération pour ralentir le dispositif d'imagerie (112) jusqu'une vitesse de déplacement relative prédéterminée après que le dispositif d'imagerie (112) a imagé une dernière des pièces à usiner à être imagées.

9. Procédé d'application de matériau liquide selon l'une quelconque des revendications 1 à 8, dans lequel, lors de l'étape de mesure des informations de hauteur, les informations de hauteur de la pluralité de pièces à usiner (10, 30) sont mesurées successivement tandis que le dispositif de télémétrie (113) et la pluralité de pièces à usiner (10, 30) sont déplacés les uns par rapport aux autres.

10. Procédé d'application de matériau liquide selon l'une quelconque des revendications 1 à 9, dans lequel, lors de l'étape d'application, l'application est effectuée selon un trajet d'application corrigé sur la base des informations de hauteur des pièces à usiner (10, 30) mesurées lors de l'étape de mesure des informations de hauteur.

11. Procédé d'application de matériau liquide selon l'une quelconque des revendications 3, 4 et 6 à 8, dans lequel la pluralité de pièces à usiner (10, 30) sont des pièces à usiner disposées selon des angles de rotation non uniformes dans des parties en creux circulaires ou ovales (34) de l'élément de placement de pièces à usiner (20, 40).

12. Procédé d'application de matériau liquide selon l'une quelconque des revendications 1 à 11, dans lequel les pièces à usiner (10, 30) sont des corps de type gel.

13. Appareil d'application de matériau liquide (101) comportant :
une tête de décharge (110) comprenant
un dispositif de décharge (111) configuré pour décharger une matériau liquide ;
un dispositif d'imagerie (112) ; et
un dispositif de télémétrie (113) ;
un dispositif de déplacement relatif (104, 105, 106) configuré pour déplacer la tête de décharge (110) et une pluralité de pièces à usiner (10, 30) les unes par rapport aux autres ; et
un contrôleur (122) comportant un dispositif de calcul et un dispositif de stockage qui stocke un programme d'application ;
dans lequel le programme d'application commande les opérations de la tête de décharge (110) et du dispositif de déplacement relatif (104, 105, 106) afin d'exécuter le procédé d'application de matériau liquide selon l'une quelconque des revendications 1 à 12 sur la pluralité de pièces à usiner à traiter (10, 30) disposées avec un désalignement positionnel.

14. Appareil d'application de matériau liquide (101) selon la revendication 13, dans lequel la pluralité des pièces à usiner (10, 30) sont des pièces à usiner identiques disposées en réseau sur un élément de placement de pièces à usiner (20, 40),
dans lequel le dispositif de déplacement relatif (104, 105, 106) est configuré pour déplacer la tête de décharge (110) et l'élément de placement des pièces à usiner (20, 40) l'un par rapport à l'autre ; et
le programme d'application commande des opérations de la tête de décharge (110) et du dispositif de déplacement relatif (104, 105, 106) afin d'exécuter le procédé d'application de matériau liquide selon l'une quelconque des revendications 6 à 8 sur la pluralité de pièces à usiner identiques (10, 30) disposées en réseau sur l'élément de positionnement des pièces à usiner (20, 40) avec un désalignement positionnel.
